Europäisches Patentamt

European Patent Office

Office européen des brevets

(19)

(11) **EP 0 528 738 B1**

(12) **FASCICULE DE BREVET EUROPEEN**

(45) Date de publication et mention
de la délivrance du brevet:
**22.01.1997 Bulletin 1997/04**

(51) Int Cl.6: **H04L 27/01**, H04L 25/03

(21) Numéro de dépôt: **92420277.3**

(22) Date de dépôt: **14.08.1992**

(54) **Procédé et circuit d'adaptation de coefficients dans un égaliseur de modem**

Verfahren und Schaltung zur Koeffizientenanpassung im Entzerrer eines Modems

Method and circuit for adapting the coefficients in the equalizer of a modem

(84) Etats contractants désignés:
**DE FR GB IT**

(30) Priorité: **19.08.1991 FR 9110651**

(43) Date de publication de la demande:
**24.02.1993 Bulletin 1993/08**

(73) Titulaire: **SGS-THOMSON MICROELECTRONICS S.A.**
**94250 Gentilly (FR)**

(72) Inventeurs:
• **Vicard, Dominique**
  **F-38130 Echirolles (FR)**

• **Glass, William**
  **F-38170 Seyssinet-Pariset (FR)**
• **Druilhe, François**
  **F-38180 Seyssins (FR)**

(74) Mandataire: **de Beaumont, Michel**
**1bis, rue Champollion**
**38000 Grenoble (FR)**

(56) Documents cités:
**EP-A- 0 419 225**    **WO-A-80/01863**
**WO-A-81/01089**    **US-A- 4 718 073**

## Description

La présente invention concerne le domaine des modulateurs/démodulateurs (modems) qui sont des circuits électroniques destinés à permettre la transmission sur une ligne téléphonique ou autre réseau, de données numériques.

Les lignes téléphoniques présentent des distorsions de temps de propagation de groupe et d'amplitude et, pour obtenir des conditions de démodulation satisfaisantes, il est nécessaire de compenser ces distorsions. Ceci est réalisé au moyen d'un égaliseur, généralement constitué d'un filtre à réponse impulsionnelle finie (FIR) auto-adaptatif.

De tels égaliseurs sont bien connus et une réalisation particulière en est par exemple décrite dans le brevet américain US-A-4237554. Comme cela est indiqué dans ce brevet, les coefficients du filtre auto-adaptatif constituant l'égaliseur sont remis à jour périodiquement, par exemple au rythme des bauds, c'est-à-dire à chaque entrée de symbole. Ainsi, chaque coefficient est mémorisé et, à chaque temps d'horloge, la valeur mémorisée est modifiée par un adaptateur qui reçoit en entrée d'une part la donnée présente, d'autre part un signal d'erreur provenant par exemple d'un circuit de détermination de moindres carrés qui compare un symbole reçu, traité par l'égaliseur, à un symbole mémorisé. En outre, l'adaptateur est associé dans le brevet susmentionné, à un circuit de rappel des coefficients (Tap Leakage) qui réduit la valeur du coefficient adapté d'une quantité constante de très petite valeur, ayant le signe du coefficient précédent. Le but de ce rappel de coefficients est de s'affranchir des erreurs d'arrondis cumulées lorsque les calculs sont effectués en arithmétique finie.

De façon générale, les procédés de rappel de coefficients connus consistent à rapprocher les coefficients de 0, soit en les multipliant par une constante légèrement inférieure à 1, soit en rajoutant une petite quantité dont le signe est déterminé par l'inverse du signe du coefficient.

Certains égaliseurs permettent d'effectuer en même temps une égalisation de canal et une transformation de Hilbert, autorisant ainsi en une seule opération de filtrage l'égalisation et le passage au signal analytique complexe. Dans le cas de ces égaliseurs, la position de repos de l'égaliseur n'est plus un filtre formé essentiellement de coefficients nuls, mais un filtre réalisant la transformation en signal analytique. Le rappel à zéro introduit alors un décalage dans la réponse désirée. De plus, dans certaines structures d'égaliseur, en régime stationnaire, lorsque l'égaliseur a convergé, le signal étant à bande limitée, l'algorithme d'auto-adaptation ne dispose plus d'information sur les parties du signal d'entrée comprises en dehors de la bande utile. Il se produit alors une dérive des coefficients, particulièrement nette dans le cas des égaliseurs à coefficients complexes et ceci peut introduire des gains importants en dehors de la bande utile du signal. Cette dérive peut être accentuée par un rappel vers 0. A priori, ceci n'est pas gênant puisque l'on se retrouve en dehors de la bande utile mais en fait, la ligne peut être perturbée par des bruits à large spectre et à forte énergie tels que des bruits impulsionnels et ces bruits ne seront plus éliminés par l'égaliseur.

Pour pallier ces inconvénients, la présente invention propose de mémoriser une valeur de repos des coefficients puis d'effectuer le rappel des coefficients en tenant compte de la différence instantanée entre la valeur de repos et la valeur présente d'un coefficient. On s'assure ainsi que le rappel des coefficients est toujours fait dans la bonne direction.

Plus particulièrement, la présente invention propose un procédé d'adaptation des coefficients dans l'égaliseur d'un modem comprenant les étapes consistant à mémoriser périodiquement une valeur de coefficient, corriger périodiquement ce coefficient par un signal d'erreur lié à la reconnaissance d'au moins un symbole reçu par le modem, et corriger périodiquement ce coefficient par un signal de rappel. Selon ce procédé, le signal de rappel est le produit d'une constante additive très inférieure à 1 par le signe de la différence entre la valeur en cours du coefficient et une valeur initiale de ce coefficient. La valeur initiale susmentionnée est déterminée lors de phases d'apprentissage du modem au début ou en cours de communication.

La présente invention prévoit aussi un circuit d'adaptation de coefficients dans l'égaliseur d'un modem, comprenant une cellule de mémorisation d'un coefficient ; des moyens adaptateurs recevant la sortie de la cellule et fournissant un premier signal affecté d'une première correction ; et des moyens additionneurs recevant le premier signal et fournissant un deuxième signal à ladite cellule. Les moyens additionneurs reçoivent en plus du premier signal une valeur $k$ très inférieure à 1 affectée du signe fourni par un comparateur entre une valeur initiale du coefficient considéré et sa valeur en cours, ladite valeur initiale étant fournie par des moyens de memorisation de ladite valeur initiale déterminée lors de phases d'apprentissage du modem au début ou en cours de communication.

Ces objets, caractéristiques et avantages ainsi que d'autres de la présente invention seront exposés en détail dans la description suivante de modes de réalisation particuliers faite en relation avec les figures jointes parmi lesquelles :

la figure 1 représente l'architecture classique d'un filtre à réponse impulsionnelle finie ;
les figures 2 et 3 représentent des circuits classiques d'adaptation de coefficients d'un égaliseur ;
la figure 4 représente schématiquement un circuit d'adaptation de coefficients d'un égaliseur selon la présente invention.

Dans la description ci-après, on traitera les diverses données comme si elles se présentaient sous forme de mots uniques. On notera qu'en pratique, comme cela est connu notamment du brevet américain susmentionné, les données apparaissent généralement sous forme de données complexes et doivent être traitées par des étages parallèles croisés.

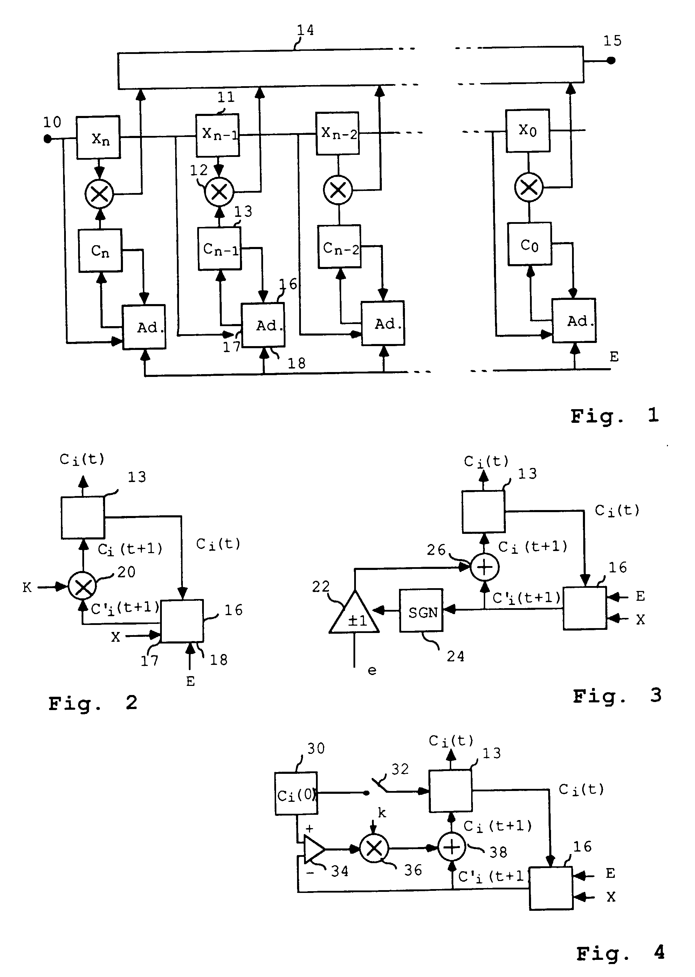

La figure 1 représente le schéma classique d'un filtre à réponse impulsionnelle finie auto-adaptatif. Ce filtre comprend une entrée de données 10 dans laquelle apparaissent les données successives $X_0$, $X_1$, $X_2$, ... $X_n$, qui sont décalées dans des cellules mémoire 11 connectées en registre. L'opération de filtrage consiste à multiplier dans un multiplieur 12 chacune des données $X_i$ par un coefficient $C_i$ temporairement stocké dans une cellule mémoire 13. Le résultat de chacune des multiplications est envoyé à un sommateur 14 qui fournit sur sa sortie 15 un signal filtré. Chaque cellule mémoire 13 est associée à un circuit adaptateur 16 qui reçoit la donnée mémorisée et fournit au temps d'horloge suivant une donnée ajustée. L'ajustement de la donnée est effectué en fonction de la donnée entrante suivante arrivant sur une entrée 17 de l'adaptateur et d'un signal d'erreur E arrivant sur une entrée 18 de l'adaptateur. Le signal d'erreur E résulte d'une mesure de l'écart entre une donnée filtrée (un symbole fourni à la sortie de l'additionneur 14) et des symboles attendus prémémorisés, les écarts successifs étant par exemple traités par la méthode des moindres carrés. Le signal d'erreur E en combinaison avec le signal de données X est traité dans l'adaptateur de façon connue pour assurer une correction du coefficient C tenant compte notamment de l'amplitude de la variation de grandeur de X.

Les figures 2 et 3 représentent des variantes connues de modules adaptateurs munis de moyens de rappel vers 0 (Tap Leakage). La cellule mémoire 13 contient à un instant donnée un coefficient $C_i(t)$ envoyé au multiplieur 12. Simultanément, ce coefficient $C_i(t)$ est envoyé à l'adaptateur 16 où il est traité et transformé en un coefficient $C'_i(t+1)$.

En figure 2, le coefficient $C'_i(t+1)$ est renvoyé à l'entrée de la cellule mémoire 13 après passage dans un multiplieur 20 qui effectue une multiplication par un facteur K légèrement inférieur à 1 pour fournir le coefficient suivant $C_i(t+1)$.

Un autre mode d'adaptation est illustré en figure 3 et correspond à ce qui est décrit dans le brevet américain 4237554 susmentionné. Dans ce cas, le passage de $C'_i(t+1)$ à $C_i(t+1)$ se fait par addition dans un additionneur 26 d'une valeur constante e, proche de 0, affectée du signe + ou - par un multiplieur 22 en fonction du signe du coefficient $C'_i(t+1)$ déterminé par un circuit 24.

Dans les deux cas de l'art antérieur mentionné, on voit que le rappel de coefficients se fait constamment vers 0 et que ce rappel s'effectue uniquement en fonction de la valeur immédiatement antérieure du coefficient C.

La figure 4 illustre un mode de réalisation d'un adaptateur mettant en oeuvre la présente invention.

On retrouve dans le circuit selon l'invention la cellule mémoire 13 mémorisant un coefficient $C_i(t)$ puis un coefficient $C_i(t+1)$, et un module adaptateur 16 fournissant un signal $C'_i(t+1)$ à partir d'un coefficient $C_i(t)$, d'un signal d'erreur E et d'une valeur de données X. Une cellule mémoire supplémentaire 30 peut être couplée en parallèle en écriture sur la cellule mémoire 13. Cette possibilité de couplage en écriture est symbolisée par un interrupteur 32. Le contenu $C_i(0)$ de la mémoire 30 est comparé à la valeur $C'_i(t+1)$ dans un comparateur 34 qui fournit une sortie positive ou négative en fonction du signe de la différence. Cette valeur +1 ou -1 est multipliée par un coefficient k voisin de 0 et la valeur $\pm$ k est additionnée au signal $C'_i(t+1)$ dans un additionneur 38 pour fournir la valeur $C_i(t+1)$. Ainsi, le circuit selon la présente invention fournit

$$C_i(t+1) = C'_i(t+1) - \text{Sign}[C'_i(t+1)-C_i(0)]^*k.$$

La valeur $C_i(0)$ est une valeur déterminée au début de l'établissement d'une communication par le modem considéré. En effet, au début de chaque communication, il est prévu une phase d'apprentissage (Hand Shake) au cours de laquelle une première estimation des coefficients est effectuée. Ainsi, au cours de l'adaptation des coefficients, même si la valeur de X devient très faible, ce qui perturbe le fonctionnement de l'adaptateur 16, le coefficient $C_i(t)$ sera néanmoins rappelé vers sa valeur initiale haute ou basse $C_i(0)$. On notera qu'en pratique, il est prévu dans certaines normes de télécommunication de répéter la phase de synchronisation et d'apprentissage à intervalles périodiques au cours d'une communication, cette période étant très longue devant la période des symboles émis et reçus par le modem.

On notera que les divers schémas sont pûrement illustratifs et que l'invention s'applique à des adaptateurs à coefficients complexes. En outre, la mise en oeuvre de l'invention impliquera souvent, plutôt que des circuits spécifiques, l'utilisation d'un microprocesseur convenablement programmé associé à des mémoires.

## Revendications

1. Procédé d'adaptation des coefficients dans l'égaliseur d'un modem, comprenant les étapes suivantes :

   mémoriser périodiquement une valeur de coefficient ;
   corriger périodiquement ce coefficient par un signal d'erreur lié à la reconnaissance d'au moins un symbole reçu par le modem ;
   corriger périodiquement ce coefficient par un signal de rappel ;

caractérisé en ce que ledit signal de rappel est le produit d'une constante additive très inférieure à 1 par le signe de la différence entre une valeur initiale du coefficient déterminée lors de phases d'apprentissage du modem au début ou en cours de communication et la valeur en cours de ce coefficient.

2. Circuit d'adaptation de coefficients dans l'égaliseur d'un modem, comprenant :

une cellule (13) de mémorisation d'un coefficient ;
des moyens adaptateurs (16) recevant la sortie de ladite cellule et fournissant un premier signal $(C'_i(t+1))$ affecté d'une première correction ;
des moyens additionneurs (38) recevant le premier signal et fournissant un deuxième signal $(C_i(t+1))$ à ladite cellule ;

caractérisé en ce que les moyens additionneurs sont aptes à recevoir, en plus du premier signal, une valeur k très inférieure à 1 affectée du signe fourni par un comparateur (34) entre une valeur initiale $(C_i(0))$ du coefficient considéré et sa valeur en cours, ladite valeur initiale $(C_i(0))$ étant fournie par des moyens (30, 32) de mémorisation de ladite valeur initiale déterminée lors de phases d'apprentissage du modem au début ou en cours de communication.

## Patentansprüche

1. Verfahren zum Adaptieren von Koeffizienten in einem Modem-Equalizer, wobei die folgenden Schritte vorgesehen sind:

periodisches Speichern eines Koeffizientenwertes;
periodisches Korrigieren des Koeffizienten durch ein Fehlersignal welches mit der Detektion von mindestens einem vom Modem empfangenen Signal assoziert ist;
periodisches Korrigieren des Koeffizienten durch ein Rückrufsignal;

dadurch gekennzeichnet, daß das Rückrufsignal das Produkt einer additiven Konstanten nicht viel kleiner als 1 ist, und zwar multipliziert mit dem Vorzeichen der Differenz zwischen einem Anfangswert des Koeffizienten bestimmt während der "hand shake" Phasen des Modems zu Beginn der Verbindung oder während der Verbindung oder Übertragung und dem laufenden derzeitigen Wert des Koeffizienten.

2. Schaltung zum Adaptieren von Koeffizienten in einem Modem-Equalizer, wobei folgendes vorgesehen ist:

eine Zelle (13) zum Speichern eines Koeffizienten;
Adaptionsmittel (16) die die Ausgangsgröße der Zelle empfangen und ein erstes Signal $(C'_i(t+1))$ vorsehen mit einer ersten Korrektur;
Addiermittel (38) zum Empfang des ersten Signals und zum Liefern eines zweiten Signals $(C_i(t+1))$ an die Zelle;

dadurch gekennzeichnet, daß die Addiermittel geeignet sind zusätzlich zum ersten Signal einen Wert k zu empfangen, der viel kleiner ist als 1 mit einem durch einen Komperator (34) gegebenen Vorzeichen, wobei der Komperator (34) einen Anfangswert $(C_i(0))$ des in Betracht gezogenen Koeffizienten und seines laufenden Wertes vergleicht, wobei der Anfangswert $(C_i(0))$ durch Mittel (30, 32) vorgesehen wird zum Speichern des Anfangswertes bestimmt während der "hand shake" Phasen des Modems zu Beginn der Übertragung (Verbindung) oder während der Übertragung.

## Claims

1. A process for adapting coefficients in a modem equalizer comprising the following steps:

periodically storing a coefficient value;
periodically correcting said coefficient by an error signal associated to the detection of at least one symbol provided to said modem;
periodically correcting said coefficient by a recall signal;

characterized in that said recall signal is the product of an additive constant, much smaller than 1, multiplied by the sign of the difference between an initial value of said coefficient determined during the hand shake phases of the modem at the beginning of the communication or during the communication and the current value of the coefficient.

2. A circuit for adapting coefficients in a modem equalizer, comprising:

a cell (13) for storing a coefficient;
adapting means (16) receiving the output of said cell and providing a first signal $(C'_i(t+1))$ having a first correction;
adding means (38) receiving said first signal and providing a second signal $(C_i(t+1))$ to said cell;

characterized in that said adding means are adapted to receive, in addition to said first signal, a value k much smaller than 1 having a sign given by a comparator (34) comparing an initial value ($C_i(0)$) of the considered coefficient and its current value, said initial value ($C_i(0)$) being provided by means (30, 32) for storing said initial value determined during the hand shake phases of the modem at the beginning of the communication or during the communication.

Fig. 1

Fig. 2

Fig. 3

Fig. 4